# EUROPEAN PATENT SPECIFICATION

(11) **EP 0 624 127 B1**
(45) Date of publication and mention of the grant of the patent: **10.07.2002**
(21) Application number: 93904669.4
(22) Date of filing: 27.01.1993
(51) Int. Cl.: B32B 27/08, C09J 7/02

(54) **RELEASE SHEET**
TRENNPAPIER
FEUILLE DE DECOLLAGE

(30) Priority: 29.01.1992 US 827312; 29.01.1992 US 827314
(43) Date of publication of application: 17.11.1994
(73) Proprietor: EXXONMOBIL OIL CORPORATION, Fairfax, VA 22037-0001 (US)
(72) Inventor: ALL, Frank, Edward, Newark, NY 14513 (US); CHANG, Keunsuk, Paul, Fairport, NY 14450 (US); LU, Pang, Chia, Pittsford, NY 14534 (US); REID, Leland, Wallace, Palmyra, NY 14522 (US); WEBER, Ralph, Johannes, Fairport, NY 14450 (US)
(74) Representative: Samuels, Lucy Alice
(86) International application number: US9300727
(87) International publication number: WO9314932

(56) References cited:
- EP-A- 0 281 681
- WO-A-92/03233
- US-A- 4 609 589
- US-A- 5 064 717

## Description

This invention relates to composite film form materials suitable for use as release sheets. It more specifically refers to such composite materials having improved ink adhesion characteristics.

Composite polymeric film form materials are well known in the plastics art. It is well known to make such a composite of a construction such that it is usable for applying releasably secured film form material thereto, such as peelable labels.

In the known construction, a base liner of suitable film form material has a release coating applied to at least one surface thereof. A tacky adhesive material is applied to at least one surface of a face stock, and the face stock is releasably adhered to the base liner by contact of this tacky adhesive with the release coating.

The release coating is a material which adheres well to the base liner but has the property of only lightly holding, and therefore easily releasing, the adhesive coated face stock film form material which is applied thereover. This structure allows the production of peelable labels and the like in a most efficient fashion.

In this sort of composite film form material, it is conventional to make the release coating out of an electron beam curable composition comprising a silicone resin to which crosslinkable groups, such as acrylic residues, have been appended. The silicone portion of the composition acts as a release agent, and the acrylic groups act to crosslink the release coating composition together and to bond this composition to the base liner surface.

It has been found that, although this composite structure works well and constitutes a commercially available material, there are some things about this structure which perform less than satisfactorily. It has been found that, when the composite of the release coating and the base liner is made as an extended length film, and it is rolled up upon itself for storage, subject to later use by having face stock suitably applied thereto, portions of the release coating composition apparently do not crosslink when subjected to the electron beam curing process. It is not known if these portions of the compositions do not have acrylic substituents, or if they do have such substituents and just have not reacted sufficiently to be well bound into the release sheet.

Whatever is the reason, these more mobile portions of the release coating composition, principally those portions which are on the exposed surface of the release coating, called in the industry "loose juice", tend not to remain in the release coating composition layer. Upon the composite base liner and release coating being rolled up for storage or shipping, these portions come loose and transfer to the other side of the base liner; that is the back side of the base liner which is in contact with the release coating when the composite is rolled up. Upon transfer of this material to the back side of the base liner, it interferes with the later printing of indicia on the back side of the composite film.

Further, when the composite film material is unrolled, and a face stock is adhered over the release coating, it is conventional practice to once again roll up this new composite, of base liner, release coating, and face stock, for storage and transportation. Just as some of the loose juice tended to transfer from the release coating to the back of the base liner when the original composite was rolled up, some of the loose juice which is on the back of the base liner then tends to retransfer to the top of the face stock when this composite is rolled up. In this location, the transferred loose juice interferes with the adhesion of inked indicia sought to be printed on the top of the face stock.

Still further, the presence of unbonded silicone moieties which exist in the release coating tends to be detrimental to this product even if they do not transfer to the back of the base liner. Even if some of this loose juice transfers to the back of the base liner, still more of it stays in the release coating. At least some of the loose juice which remains in the release coating tends to migrate to the tacky adhesive on the face stock and reduces or eliminates its tackiness. The peelable face stock is necessarily tacky in this product or it will not adhere to another surface after it has been peeled from the base liner. If the tackiness of the adhesive is reduced or eliminated, the face stock cannot be used for its intended purpose.

It is therefore an important object of this invention to provide means to prevent or at least retard the transference of mobile components of the release coating, containing silicone molecules, out of the release coating and onto other surfaces.

It is another object of this invention to provide means for constructing a composite film form material made up of a base liner and a release coating having improved ink retention properties.

It is a further object of this invention to provide a composite film form material made up of a base liner, a release coating, and a face stock releasably adhesively adhered to the release coating having improved ink retention properties on both the exposed surface of the base liner and of the face stock.

According to one aspect of this invention, there is provided a release sheet as defined in claim 1. Desirably, the polymer containing pendant acid groups is compatible with the base liner material. For example, where the base liner is polypropylene, this skin can suitably be a copolymer of propylene and an olefinically unsaturated acid.

According to another aspect of this invention, there is further provided a release sheet as aforementioned including a face stock releasably adhesively adhered to at least one of the release coatings.

According to this invention, the polymer containing pendant acid groups and/or the high surface energy material is disposed on at least one surface of the base liner. In the embodiment where there is a release coating disposed on only one surface of the base liner, the polymer containing pendant acid groups and/or the high surface energy material may be disposed on the other surface of the base liner, and/or it may be disposed on the surface of the base liner adjacent the release coating, that is between the release coating and the base liner.

Where there are release coatings disposed on both surfaces of the base liner, it is suitable to provide the polymer containing pendant acid groups and/or the high surface energy material between one or both of these release coatings and the adjacent base liner. In this embodiment, it is preferred to provide the polymer containing pendant acid groups and/or the high surface energy material between both release coatings and their respective proximate base liner surfaces.

The base liner is a film form material which may be polymeric in nature. These materials are conventional in this art and are exemplified by: paper, oriented polypropylene, polyethylene, polyamide, polystyrene or polyethylene terephthalate.

The release coating is a composition which, when applied to the base liner, has very low surface tack and therefore has the ability to readily release materials, particularly polymeric films, disposed thereon. In general, those silicone polymers which will release materials overlayed thereon, and which can be cured or crosslinked by conventional means, such as electron beam, ultra-violet radiation and heat, are appropriately used. An example of a material which is suited to use as a release coating in this invention is a silicone-acrylate composition. Exemplary of such compositions as those described in EP 0281681.

It is common to use a composition for the release coating which is disposed on the base liner in an uncured form and is then cured in place. One of the techniques used to apply this release coating is to coat an uncured composition on a surface of the base liner and then to impinge an electron beam onto this composition for a time and under conditions suitable for converting this coating into a crosslinked film which is adhered to the surface of the base liner. The thus crosslinked release coating contains mostly crosslinked silicone acrylate moieties which are bound together and to the surface of the base liner.

The acid polymer which contains pendant acid groups and which is compatible or partially compatible with the base liner material may be a homopolymer or copolymer of at least one olefinically unsaturated carboxylic acid, such as acrylic acid, or it may be a copolymer of at least one olefin and at least one other monomer copolymerizable therewith which has at least one pendant carboxyl group. The unsaturated acid is exemplified by: acrylic acid, methacrylic acid, itaconic acid, maleic acid, crotonic acid, fumaric acid, and other similar, olefinically unsaturated acids. It is considered that the residues of these acids are the moieties which are contained in the polymer. Therefore, the exact moiety which is used to introduce these acids into the polymer is not critical to the practice of this invention. Thus, esters, anhydrides, acid chlorides as well as the acids themselves, are suitable for use in this invention. Where the acid containing moiety is not the acid itself, it may be necessary or desirable to treat the copolymer so produced to release the free acid.

The olefin to be copolymerized with the unsaturated acid is exemplified by at least one lower olefin such as: ethylene, propylene, butene-1, hexene-1, octene-1, and decene-1. The specific comonomer olefin is not critical so long as the ultimate copolymer with acid pendant groups is compatible with the base liner material to an extent sufficient for the skin to adhere to the base liner.

Where copolymers consisting of more than one acid containing monomer are used in this invention, the proportions of each monomer may vary widely. Since all of the monomers in this embodiment contain pendant acid moieties, the exact proportion of each can be selected in order to achieve other physical properties of this skin material as desired.

Where copolymers of at least one acid contributing monomer and at least one non-acid contributing monomer are used in this aspect of this invention, these different components may be used in proportions of about 2 to 50 weight percent acid contributing monomer(s) and 98 to 50 weight percent non-acid contributing monomer(s). It has been found to be preferable to employ a polymer skin having at least 3, up to a maximum of 70 acid groups per 10,000 weight average molecular weight.

There is no particular limit on the thickness of the acid containing polymer skin. Suitably, the skin should be 1 to 10 µm thick, which represents 2 to 20 % of the thickness of the base liner.

The high surface energy materials are suitably surfactants and/or emulsifiers. Such surfactants and emulsifiers should have a high surface wetting affinity to the silicone release coating. The high surface energy material can be ionic or non-ionic in nature. The non-ionic surfactants are preferred, with the most preferred surfactants being those which have a hydrophilic/lipophilic balance value (HLB) of about 4-30, preferably about 8 to 20.

The high surface energy materials are suitably put up in a composition comprising the surfactant/emulsifier material and a binder therefor. Where appropriate, this composition may also comprise a carrier, such as water or an organic solvent. The binder is necessary to both hold the high surface energy material together and to adhere it to the surface of the base liner. In an appropriate formulation, it is possible, and it is within the scope of this invention, that the high energy materials may be so constituted as to provide constituent portions of their molecules which act as the high surface energy material and other constituent portions which act as the binder. Thus, such compositions would be self binding. The high surface energy material/binder/carrier composition is suitably coated on the base liner surface, and the carrier removed in a conventional fashion. The binder is then conventionally crosslinked.

Examples of such materials are surfactants and emulsifiers, such as those which are listed in McCutcheon' Emulsifiers and Detergents, North American Edition, 1989. These include: polyethylene oxides such as those sold under the name Carbowax, particularly Carbowax-8000, by Union Carbide Corporation; block copolymers of propylene oxide and ethylene oxide, sold under the name of Pluronic, particularly Pluronic F-68 (HBL=29), by the Chemicals Division of BASF Corporation; alkyl polyethoxy ethanols, sold under the name of Triton, particularly Triton X-67 (HBL=16.7), by the Rohm and Haas Company; poly (methyl vinyl ether/maleic anhydride), sold under the name of Gantrez, particularly Gantrez AN-119, by GAF Corporation; dioctyl ester of sodium sulfosuccinic acid, sold under the name of Aerosol, particularly Aerosol OT-100, by American Cyanamid Company; polyoxyethylene lauryl ether, sold under the name Brij, particularly Brij-35 (HBL=16.9) and Brij-700 (HBL=16,7), by ICI Americas; polyoxyethylene stearate, sold under the name of Myrj, particularly Myrj-52, by ICI Americas; sorbitan monostearate, sold under the name Span, particularly Span-60 (HBL=4.7), by ICI Americas; polyoxyethylene distearate, sold under the name of Pergosperse, particularly Pergosperse 400DS (HBL=7.8), by Lonza; polyoxyethylene (20) sorbitan tristearate, sold under the name of Tween, particularly Tween-65 (HBL=10.5), by ICI Americas; and ethylene glycol monostearate, sold under the name of Tegin, particularly Tegin EGMS/VA, by Goldschmidt Chemical Corp.

Where the high surface energy material is formulated with a separate binder, such binders are exemplified by: ethylene-acrylic acid emulsions, such as those which are commercially sold under the name Michem, particularly Michem-4983, by Michelman Corporation; acrylic emulsions, such as those sold under the name of Acrylic, particularly Acrylic 79XW318A and 89XW055, by Valspar Corporation; Surlyn emulsions, sold under the name of Adcote, particularly Adcote 56220, by Morton International, specialty chemicals group; and melamine formaldehyde resins, sold under the name of Parez, particularly Parez-613, by American Cyanamid Company.

The face stock is conventional film form material which is well known to be used for this service. Exemplary of materials which are suited to use in this service are films of paper, polyethylene terephthalate, polyethylene, polystyrene and metal foils.

The adhesive is a conventional material which is well known to be used for this service. Exemplary of adhesive materials which are known to be used here are acrylic emulsions, such as those sold commercially under the name XPLA-12, by the Dyna-tech Company, styrene-butadiene rubber emulsions, such as those sold under the name Bond-master 72-9718 by National Starch Company, and hot-melt adhesives, such as those sold under the trade name HL-2021, or HL-2203X, by the H.B. Fuller Company.

It is known to provide the base liner, at the surface thereof which is adjacent the release coating, with a skin of a material having tougher physical properties. When the face stock is releasably secured to the release coating, and then die cut into suitable shapes, the cutting die is retarded from penetrating and cutting through the base liner by the presence of this tougher skin layer. Such a structure of the base liner is intended to be included within the instant specification. It is intended to be within the scope of this invention, to dispose the acid containing polymer skin material on top of the tough skin material as disclosed in this copending application. In this structure, the benefits of both toughness and retention of the "loose juice" silicone material is accomplished. It is also an embodiment of this invention to provide an acid containing skin layer on the base liner which skin layer is made of a polymer which is tougher than the base liner polymer itself. Such a polymer will then serve both functions, of protecting the base liner from being cut by the die, and controlling the "loose juice", simultaneously.

The following Examples illustrate the invention; parts and percentages are by weight unless expressly stated otherwise.

### EXAMPLE 1

A series of base liner sheets of oriented polypropylene, nominally 50.8 µm (2 mils) thick, were coated on one surface thereof with a copolymer of propylene and maleic anhydride. The coating weighed 2.48 g/m² (1.6 g/1000 square inches). The thus coated base liner surface was then coated with a conventional silicone-acrylate release composition on the uncoated side. The release coating side of the composite so formed was electron beam cured at a radiation dose of 2 Mrads under a nitrogen atmosphere, at a line speed of 50 feet per minute to form a release layer weighing 1 g/m² (0.6 g/1000 square inches).

After curing, the composite film was rolled up in a conventional manner and stored in the rolled condition for at 52°C (125°F) for four (4) days. The back side of the composite film was imprinted with a #8800 Berol Magic Marker which was then tested for ink retention. This sample showed substantially no ink wetting problems, that is, on a scale of 1-10, with 10 being the best ink retention and 1 being the worst, this sample was judged to be an 8.

This indicated that the provision of the acid containing skin on the base liner drastically reduced the effect of detrimental ink wetting by the loose silicone material from transferring out of the release coating onto the back of the composite film when it was rolled up in storage.

### COMPARATIVE EXAMPLE 2

The same base liner was coated with the same release coating as in the example, only the surface layer of the acid modified polypropylene on the base liner was omitted. The same curing was performed and the same testing of the back side was carried out. This composite material scored a 1 on the same test as outlined above. This meant that there was severe ink wetting and retention problems.

It is clear from a consideration of these data that the provision of an acid containing skin layer on the surface of the base liner according to this invention, substantially reduced the poor ink wetting resulting from unwanted transference of mobile fragments from the release coating to the base liner during storage.

### EXAMPLE 3

Base liner films of oriented polypropylene, each nominally 2 mils thick, were coated on their back side (except for sample 1) with water solutions of a series of high surface energy materials. The coatings were all applied in a coating weight of 0.4 g/m² (0.25g/1000 square inches). The front side of the base liner films were each coated with the same conventional silicone-acrylate release composition. The release coating side of the composite so formed was electron beam cured at a radiation dose of 2.5 rads, at a line speed of 0.25 m/s (50 feet per minute). The weight of the release coating was 1 g/m² (0.6 gms/1000 square inches). The electron beam was supplied from an Electrocurtain CB-150 supplied by Energy Sciences Inc.

After curing, the composite films were rolled up in a conventional manner and stored in the rolled condition for seven (7) days. The back side of each composite film was imprinted with a #8800 Berol Magic Marker and the results rated as shown in the following Table 1:

**TABLE 1**

| sample # | front side coating | back side coating | back side magic marker rating* |
|---|---|---|---|
| 1 | silicone release | ---------- | 1 |
| 2 | silicone release | PVOH/Parez | 2 |
| 3 | silicone release | Carbowax-8000/Parez | 7 |
| 4 | silicone release | Pluronic F-68/Parez | 9 |
| 5 | silicone release | Triton X-67/Parez | 9 |
| 6 | silicone release | Gantrez AM-119/Parez | 2 |
| 7 | silicone release | sodium carboxymethyl cellulose | 6 |
| 8 | silicone release | poly(2-ethyl)oxazoline | 8 |

| | | | |
|---|---|---|---|
| *where: 1 - severe ink wetting problem 10 - no ink wetting problem. | | | |

As indicated by the above data, a layer of high surface energy coating material will greatly reduce the ink wetting problem on the back side.

It is clear from a consideration of these data that the application of the high surface energy coating of this invention substantially reduces the unwanted transference of silicone containing mobile fragments from the release sheet to the base liner.

In another set of comparative tests, a composite film consisting of an oriented polypropylene base liner with a cured silicone-acrylate release coating, had various surfactants disposed on its backside, as set forth in the following table 2. This backside coating also contained 50% Surlyn (Adcoat-56220) as a binder. The thus constituted film was wound on itself in roll form and stored at 52°C (125°F) for three (3) days. At the end of the three (3) days of hot aging, the roll was unwound and flagged with uncoated oriented polypropylene and polyethylene terephthalate films, respectively. Each composite was then wound on itself in roll form, and then stored at 52°C (125 °F) for an additional three (3) days. The roll was unwound, and the flag films were removed from the composite. The surface of the flag films which had been in contact with the backside of the base liner was evaluated for ink wet out and adhesion of a water based ink. The following table 2 shows a comparison of several runs using different high surface energy coating materials.

The release coating was a silicone-acrylate composition (known commercially as RC-450) which was applied at a coating rate of 1.08 g/m² (0.7 g/1000 square inches). The release coating was cured at 2.5 Mrad.

The ink adhesion was tested by applying Scotch brand 610 tape to the test surface and then peeling it off. The first reported number represents the area of ink left on the surface after peel off. The second reported number refers to a control sample test where the inked surface did not touch any surface of the release coating layer.

The ink wet out value was measured by applying a Berol marker to the surface and evaluating the result. The values range from 1, which is the poorest, to 10, which is the best. In the following table, OPP refers to oriented polypropylene film, and PET refers to polyethylene terephthalate film.

**TABLE 2**

| Coating material | Ink wet out | OPP ink adhesion | PET ink adhesion |
|---|---|---|---|
| None | 1 | 5%/100% | 70%/100% |
| Pluronic 25R8 | 9 | 50%/100% | 100%/100% |
| Triton X-67 | 8 | 70%/100% | 100%/100% |
| EGMS-VA | 8 | 60%/100% | 100%/100% |
| Myrj-59 | 9 | 30%/100% | 100%/100% |

It is clear from a consideration of these data that the application of the high surface energy coating of this invention substantially reduces the unwanted transference of silicone containing mobile fragments from the release sheet to the face stock.

## Claims

1. A release sheet which comprises a film form base liner having laminated to at least one side thereof a cured silicone-acrylate release coating and wherein at least one side of the base liner has a skin thereon comprising a polymer containing pendant acid groups which is a homopolymer of an olefinically unsaturated carboxylic acid or a copolymer of at least one olefin and at least one other monomer copolymerisable therewith which has at least one pendant carboxyl group and/or a high surface energy material coating thereon.

2. A release sheet according to claim 1 wherein the acidic polymer skin or high surface energy material coating is disposed between the base liner and the release coating.

3. A release sheet according to claim 1 having the release coating on only one side and in which the acidic polymer skin or high surface energy material coating is disposed on the other side of the base liner.

4. A release sheet according to any preceding claim including indicia disposed on the side of the base liner opposite to the release coating.

5. A release sheet according to any preceding claim wherein the polymer containing pendant acid groups is a homo or copolymer derived from at least one of the following monomers: acrylic acid, methacrylic acid, itaconic acid, maleic acid, crotonic acid, fumaric acid, an ester thereof, an anhydride thereof or a halide thereof.

6. A release sheet according to any preceding claim wherein the polymer containing pendant acid groups is a copolymer of at least one olefinic compound containing at least one acid moiety and at least one different olefin.

7. A release sheet according to any preceding claim wherein the polymer containing pendant acid groups is a copolymer derived from at least one of the following monomers : acid contributing moiety selected from the group consisting of acrylic acid, methacrylic acid, itaconic acid, maleic acid, crotonic acid, fumaric acid, an ester thereof, an anhydride thereof, a halide thereof; and at least one of the following olefinic monomers : ethylene, propylene, butene-1, hexene-1, octene-1 or decene-1.

8. A release sheet according to any preceding claim wherein the high surface energy material comprises a surfactant or emulsifier.

9. A release sheet according to claim 8 wherein the surfactant/emulsifier comprises a polyethylene oxide, a block copolymer of propylene oxide and ethylene oxide, an alkyl polyethoxy ethanol, a methyl vinyl ether/maleic anhydride copolymer, a dioctyl ester of sodium sulfosuccinic acid, a polyoxyethylene lauryl ether, a polyoxyethylene stearate, a sorbitan monostearate, a polyoxyethylene distearate, or an ethylene glycol monostearate.

10. A release sheet according to claim 8 or claim 9 wherein the surfactant/emulsifier is combined with a binder.

11. A release sheet according to claim 10 wherein the binder comprises an ethylene-acrylic acid copolymer, an acrylic polymer, an ionomer which is derived from ethylenemethacrylic acid copolymer, or a melamine-formaldehyde resin.

12. A release sheet according to any preceding claim wherein the base liner comprises paper, oriented polypropylene, polyethylene, polyamide, polystyrene or polyethylene terephthalate.

13. A composite sheet comprising a release sheet according to any preceding claim and a face stock film releasably secured by tacky adhesive to the release coating.

14. A composite sheet according to claim 13 wherein the face-stock film comprises paper, oriented polypropylene, polyethylene terephthalate, polyethylene, polystyrene, or metal foil.

15. A roll of a release sheet according to any one of claims 1 to 12 or a composite sheet according to claim 13 or claim 14.

## Patentansprüche

1. Trennfolie, die einen Filmträger in Filmform umfaßt, der auf mindestens einer Seite mit einer Trennschicht aus gehärtetem Silicon-Acrylat laminiert ist, und wobei mindestens eine Seite des Filmträgers eine Haut, die ein Polymer umfaßt, das gebundene Säuregruppen enthält, das ein Homopolymer einer olefinisch ungesättigten Carbonsäure oder ein Copolymer von mindestens einem Olefin und mindestens einem anderen Monomer, das damit copolymerisiert werden kann, ist, das mindestens eine gebundene Carboxylgruppe hat, und/oder eine Beschichtung aus einem Material mit einer hohen Oberflächenenergie aufweist.

2. Trennfolie nach Anspruch 1, wobei die Haut aus einem sauren Polymer oder die Beschichtung aus einem Material mit hoher Oberflächenenergie zwischen dem Filmträger und der Trennschicht angeordnet ist.

3. Trennfolie nach Anspruch 1, die die Trennschicht nur auf einer Seite hat und bei der die Haut aus dem sauren Polymer oder die Beschichtung aus dem Material mit hoher Oberflächenenergie auf der anderen Seite des Filmträgers angeordnet ist.

4. Trennfolie nach einem der vorstehenden Ansprüche, die einen Stempel trägt, der sich auf der zur Trennschicht entgegengesetzten Seite des Filmträgers befindet.

5. Trennfolie nach einem der vorstehenden Ansprüche, wobei das gebundene Säuregruppen enthaltende Polymer ein Homo- oder Copolymer ist, das von mindestens einem der folgenden Monomere abgeleitet ist: Acrylsäure, Methacrylsäure, Itaconsäure, Maleinsäure, Crotonsäure, Fumarsäure, einem Ester davon, einem Anhydrid davon oder einem Halogenid davon.

6. Trennfolie nach einem der vorstehenden Ansprüche, wobei das gebundene Säuregruppen enthaltende Polymer ein Copolymer von mindestens einer Olefinverbindung ist, die mindestens eine Säureeinheit und mindestens ein anderes Olefin enthält.

7. Trennfolie nach einem der vorstehenden Ansprüche, wobei das gebundene Säuregruppen enthaltende Polymer ein Copolymer ist, das von mindestens einem der folgenden Monomere: einer Säure beitragenden Einheit, ausgewählt aus der Gruppe von Acrylsäure, Methacrylsäure Itaconsäure, Maleinsäure, Crotonsäure, Fumarsäure, einem Ester davon, einem Anhydrid davon und einem Halogenid davon; und mindestens einem der folgenden Olefinmonomere abgeleitet ist: Ethylen, Propylen, Buten-1, Hexen-1, Octen-1 oder Decen-1.

8. Trennfolie nach einem der vorstehenden Ansprüche, wobei das Material mit hoher Oberflächenenergie ein oberflächenaktives Mittel oder einen Emulgator umfaßt.

9. Trennfolie nach Anspruch 8, wobei das oberflächenaktive Mittel/der Emulgator ein Polyethylenoxid, ein Blockcopolymer von Propylenoxid und Ethylenoxid, einen Alkylpolyethoxyethanol, ein Methylvinylether/Maleinsäureanhydrid-Copolymer, einen Dioctylester von Natriumsulfosuccinsäure, einen Polyoxyethylenlaurylether, ein Polyoxyethylenstearat, Sorbitanmonostearat, Polyoxyethylendistearat oder Ethylenglycolmonostearat umfaßt.

10. Trennfolie nach Anspruch 8 oder Anspruch 9, wobei das oberflächenaktive Mittel/der Emulgator mit einem Bindemittel kombiniert ist.

11. Trennfolie nach Anspruch 10, wobei das Bindemittel ein Ethylen-Acrylsäure-Copolymer, ein Acrylpolymer, ein Ionomer, das von einem Ethylen-Methacrylsäure-Copolymer abgeleitet ist, oder ein Melamin-Formaldehyd-Harz umfaßt.

12. Trennfolie nach einem der vorstehenden Ansprüche, wobei der Filmträger Papier, orientiertes Polypropylen, Polyethylen, Polyamid, Polystyrol oder Polyethylenterephthalat umfaßt.

13. Verbundfolie, die eine Trennfolie nach einem der vorstehenden Ansprüche und einen Film aus einem Vorderseitenmaterial umfaßt, der durch ein Klebemittel trennbar mit der Trennschicht verbunden ist.

14. Verbundfolie nach Anspruch 13, wobei der Film aus einem Vorderseitenmaterial Papier, orientiertes Polypropylen, Polyethylenterephthalat, Polyethylen, Polystyrol oder eine Metallfolie umfaßt.

15. Rolle aus einer Trennfolie nach einem der Ansprüche 1 bis 12 oder einer Verbundfolie nach Anspruch 13 oder Anspruch 14.

## Revendications

1. Feuille séparable qui comprend une couche de support de base sous forme de film sur au moins un côté duquel est laminé un revêtement de séparation de silicone-acrylate réticulé et dans laquelle un côté au moins de la couche de support de base porte une peau comprenant un polymère contenant des groupes acides pendants qui est un homopolymère d'un acide carboxylique insaturé oléfiniquement ou un copolymère d'au moins une oléfine et d'au moins un autre monomère copolymérisable avec celle-ci qui a au moins un groupe carboxy pendant, et/ou un revêtement de matière à haute énergie de surface par dessus.

2. Feuille séparable suivant la revendication 1, dans laquelle la peau de polymère acide ou le revêtement de matière à haute énergie de surface est disposé entre la couche de support de base et le revêtement de séparation.

3. Feuille séparable suivant la revendication 1, portant le revêtement de séparation sur une face seulement et dans laquelle la peau de polymère acide ou le revêtement de matière à haute énergie de surface est disposé sur l'autre face de la couche de support de base.

4. Feuille séparable suivant l'une quelconque des revendications précédentes, comprenant des marques disposées sur le côté de la couche de support de base opposé au revêtement de séparation.

5. Feuille séparable suivant l'une quelconque des revendications précédentes, dans laquelle le polymère contenant des groupes acides pendants est un homopolymère ou un copolymère dérivé d'au moins l'un des monomères suivants : acide acrylique, acide méthacrylique, acide itaconique, acide maléique, acide crotonique, acide fumarique, un ester de ceux-ci, un anhydride de ceux-ci ou un halogénure de ceux-ci.

6. Feuille séparable suivant l'une quelconque des revendications précédentes, dans laquelle le polymère contenant des groupes acides pendants est un copolymère d'au moins un composé oléfinique contenant au moins une partie acide et d'au moins une oléfine différente.

7. Feuille séparable suivant l'une quelconque des revendications précédentes, dans laquelle le polymère contenant des groupes acides pendants est un copolymère dérivé d'au moins l'un des monomères suivants : une partie fournissant un acide choisie dans le groupe consistant en acide acrylique, acide méthacrylique, acide itaconique, acide maléique, acide crotonique, acide fumarique, un ester de ceux-ci, un anhydride de ceux-ci ou un halogénure de ceux-ci ; et au moins l'un des monomères oléfiniques suivants : éthylène, propylène, butène-1, hexène-1, octène-1 ou décène-1.

8. Feuille séparable suivant l'une quelconque des revendications précédentes, dans laquelle la matière à haute énergie de surface comprend un tensioactif ou un émulsifiant.

9. Feuille séparable suivant la revendication 8, dans laquelle le tensioactif/émulsifiant comprend un oxyde de polyéthylène, un copolymère bloc d'oxyde de propylène et d'oxyde d'éthylène, un alkyl polyéthoxy éthanol, un copolymère de méthylvinyléther et d'anhydride maléique, un ester dioctylique d'acide sulfosuccinique de sodium, un polyoxyéthylène lauryléther, un stéarate de polyoxyéthylène, un monostéarate de sorbitan, un distéarate de polyoxyéthylène ou un monostéarate d'éthylène glycol.

10. Feuille séparable suivant la revendication 8 ou la revendication 9, dans laquelle le tensioactif/émulsifiant est combiné à un liant.

11. Feuille séparable suivant la revendication 10, dans laquelle le liant comprend un copolymère d'éthylène et d'acide acrylique, un polymère acrylique, un ionomère dérivé d'un copolymère d'éthylène et d'acide méthacrylique ou une résine mélamine-formaldéhyde.

12. Feuille séparable suivant l'une quelconque des revendications précédentes, dans laquelle la couche de support de base comprend du papier, du polypropylène orienté, un polyéthylène, un polyamide, un polystyrène ou un téréphtalate de polyéthylène.

13. Feuille composite comprenant une feuille séparable suivant l'une quelconque des revendications précédentes et un film de matière de surface frontale fixé au revêtement de séparation par un adhésif collant.

14. Feuille composite suivant la revendication 13, dans laquelle le film de matière de surface frontale comprend un papier, un polypropylène orienté, un téréphtalate de polyéthylène, un polyéthylène, un polystyrène ou une feuille métallique.

15. Rouleau d'une feuille séparable suivant l'une quelconque des revendications 1 à 12 ou d'une feuille composite suivant la revendication 13 ou la revendication 14.
